# EUROPEAN PATENT APPLICATION

(11) **EP 4 194 271 A1**
(43) Date of publication of application: **14.06.2023**
(21) Application number: 22211384.7
(22) Date of filing: 05.12.2022
(51) Int. Cl.: B60R 7/02

(54) **STORAGE ORGANIZING ARTICLE AND SYSTEM**

(30) Priority: 08.12.2021 US 202117643217
(71) Applicant: Thermoflex Corporation, Waukegan, IL 60085 (US)
(72) Inventor: REBAND, David, Antioch, 60002 (US); PRICE, Robert, Mettawa, 60048 (US)
(74) Representative: Hohendorf Kierdorf Patentanwälte PartGmbB

(57) **Abstract**

A storage organizing article, comprising a foundation (20) comprising a horizontal floor (18); a first container (200) having a plurality of engagement footings; wherein the first container is releasably connectable to the foundation via the plurality of engagement footings; wherein the horizontal floor has a base wall, a plurality of retention members (30) and a plurality of engagement receptacles; wherein each engagement receptacle is formed by a sub-grouping of the plurality of retention members (30) , respectively; and wherein, when the foundation and the first container are connected, each of the engagement footings is respectively disposed in one of the engagement receptacles and forms a releasable interference fit with the sub-grouping of the plurality of retention members which form the engagement receptacle.

## Description

### FIELD

The present disclosure relates to a storage organizing article and system, particularly for a motor vehicle such as a land vehicle (e.g. automobile).

### BACKGROUND

The storage and organizing of articles within a motor vehicle has led to a variety of designs for the consumer. Along such lines, the need remains for a storage organizing article that allows a consumer the ability to customize and provide locations within the vehicle where articles maybe stored and isolated from other items within the vehicle.

### SUMMARY

A storage organizing article is provided, which comprises a foundation comprising a horizontal floor; at least one container having a plurality of engagement footings; wherein the container is releasably connectable to the foundation via the plurality of engagement footings of the container; wherein the horizontal floor has a base wall, a plurality of retention members and a plurality of engagement receptacles; wherein each engagement receptacle of the plurality of engagement receptacles is formed by a sub-grouping of the plurality of retention members, respectively; and wherein, when the foundation and the container are connected, each of the engagement footings of the plurality of engagement footings is respectively disposed in one of the engagement receptacles of the plurality of engagement receptacles and forms a releasable friction fit with the sub-grouping of the plurality of retention members which form the engagement receptacle.

In at least one embodiment, each of the engagement footings of the plurality of engagement footings comprises a projection, respectively; each retention member of each sub-grouping of the plurality of retention members comprises a projection which projects vertically upward relative to the base wall, respectively; and, when the foundation and the container are connected, each projection of each of the engagement footings is disposed in one of the engagement receptacles, respectively, and forms a releasable friction fit with each of the projections of each sub-grouping which forms the engagement receptacle, respectively.

In at least one embodiment, the projection of each of the engagement footings is substantially identical.

In at least one embodiment, the projection of each of the engagement footings is cylindrical in cross-section.

In at least one embodiment, the projection of each retention member of each sub-grouping is substantially identical.

In at least one embodiment, the projection of each retention member of each sub-grouping is polygonal in cross-section.

In at least one embodiment, the projection of each retention member of each sub-grouping is square in cross-section.

In at least one embodiment, each engagement receptacle of the plurality of engagement receptacles formed by a sub-grouping of the plurality of retention members is formed by at least two retention members, respectively.

In at least one embodiment, each sub-grouping of the plurality of retention members is formed by four retention members, respectively.

In at least one embodiment, the four retention members of each sub-grouping are substantially equally spaced around a center of each engagement receptacle of the plurality of engagement receptacles, respectively.

In at least one embodiment, the plurality of retention members are arranged in a plurality of rows; wherein a first set of the plurality of rows are substantially parallel to one another; wherein a second set of the plurality of rows are substantially parallel to one another; and wherein the first set of the plurality of rows and the second set of the plurality of rows are substantially perpendicular to one another.

In at least one embodiment, the first set of the plurality of rows comprises at least 2 rows, at least 3 rows, at least 4 rows, at least 5 rows, at least 6 rows, at least 7 rows, at least 8 rows, at least 9 rows, at least 10 rows, at least 11 rows, at least 12 rows or at least 13 rows; and the second set of the plurality of rows comprises at least 2 rows, at least 3 rows, at least 4 rows, at least 5 rows, at least 6 rows, at least 7 rows, at least 8 rows, at least 9 rows, at least 10 rows, at least 11 rows, at least 12 rows or at least 13 rows.

In at least one embodiment, each row of the first set of the plurality of rows comprises at least 2 retention members, at least 3 retention members, at least 4 retention members, at least 5 retention members, at least 6 retention members, at least 7 retention members, at least 8 retention members, at least 9 retention members, at least 10 retention members, at least 11 retention members, at least 12 retention members or at least 13 retention member; and each row of the second set of the plurality of rows comprises at least 2 retention members, at least 3 retention members, at least 4 retention members, at least 5 retention members, at least 6 retention members, at least 7 retention members, at least 8 retention members, at least 9 retention members, at least 10 retention members, at least 11 retention members, at least 12 retention members or at least 13 retention members.

In at least one embodiment, the base wall is planar.

In at least one embodiment, the foundation further comprises a perimeter rim which at least partially surrounds the horizontal floor.

In at least one embodiment, the foundation further comprises a perimeter rim which completely surrounds the horizontal floor.

In at least one embodiment, the foundation is in a form of a floor mat.

In at least one embodiment, the foundation is formed of an injection molded thermoplastic composition.

In at least one embodiment, the container is formed of an injection molded thermoplastic composition.

In at least one embodiment, the container has a storage volume in a range of 1liter to 100 liters.

### BRIEF DESCRIPTION OF THE DRAWINGS

The above-mentioned and other features of this disclosure, and the manner of attaining them, will become more apparent and better understood by reference to the following description of embodiments described herein taken in conjunction with the accompanying drawings, wherein:
FIG. 1 is an isometric view of a storage organizing article having vertical wall segments connected to a foundation according to the present disclosure;
FIG. 2 is a front plan view of the storage organizing article of FIG. 1 (with the center of the horizontal floor filled in with retention members 30);
FIG. 3 is a side view of the storage organizing article of FIG. 1;
FIG. 4 is a cross-sectional view of the storage organizing article of FIG. 1 taken along line 4-4 of FIG. 3;
FIG. 5 is an exploded isometric view of the vertical wall segments and the foundation of the storage organizing article of FIG. 1;
FIG. 6 is an enlarged view of a section of the foundation shown in the dashed line rectangular box RB1 of FIG. 4, before connection of the vertical wall segments to the foundation;
FIG. 7 is an isometric view of the vertical wall segments from FIG. 5;
FIG. 8 is side view of a straight (linear) wall segment of the vertical wall segments of FIG. 7;
FIG. 9 is an isometric view of a corner (90 degree bend) wall segment of the vertical wall segment of FIG. 7;
FIG. 10 is an enlarged view of a section of the foundation shown in the dashed line rectangular box RB1 of FIG. 4, after connection of the vertical wall segments to the foundation;
FIG. 11 is an enlarged view of a section of the foundation shown in the dashed line rectangular box RB2 of FIG. 4, after connection of the vertical wall segments to the foundation; and
FIGS. 12A-12H are front plan views of the storage organizing article with various configurations of wall segments;
FIG. 13 is an isometric bottom view of containers of the storage organizing article; and
FIG. 14 is an isometric top view of the containers disposed on a floor mat.

### DETAILED DESCRIPTION

It may be appreciated that the present disclosure is not limited in its application to the details of construction and the arrangement of components set forth in the following description or illustrated in the drawings. The invention(s) herein may be capable of other embodiments and of being practiced or being carried out in various ways. Also, it may be appreciated that the phraseology and terminology used herein is for the purpose of description and should not be regarded as limiting as such may be understood by one of skill in the art.

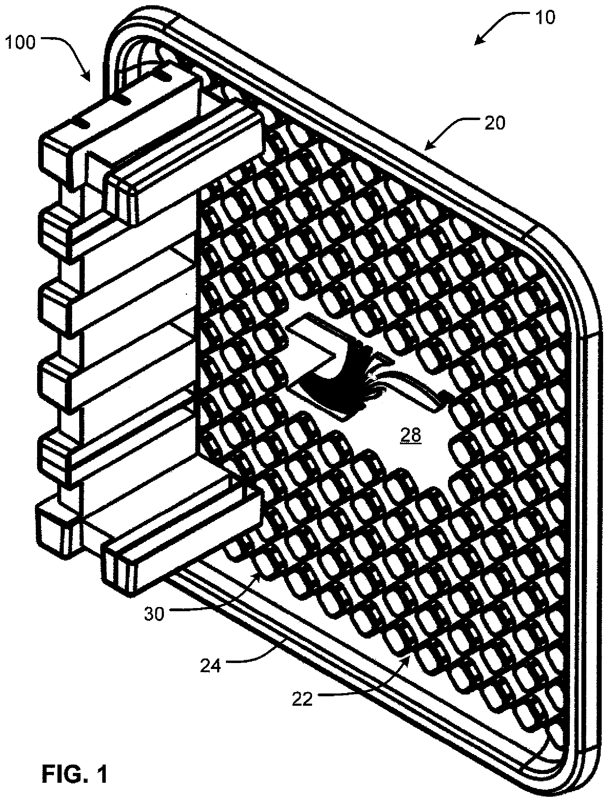

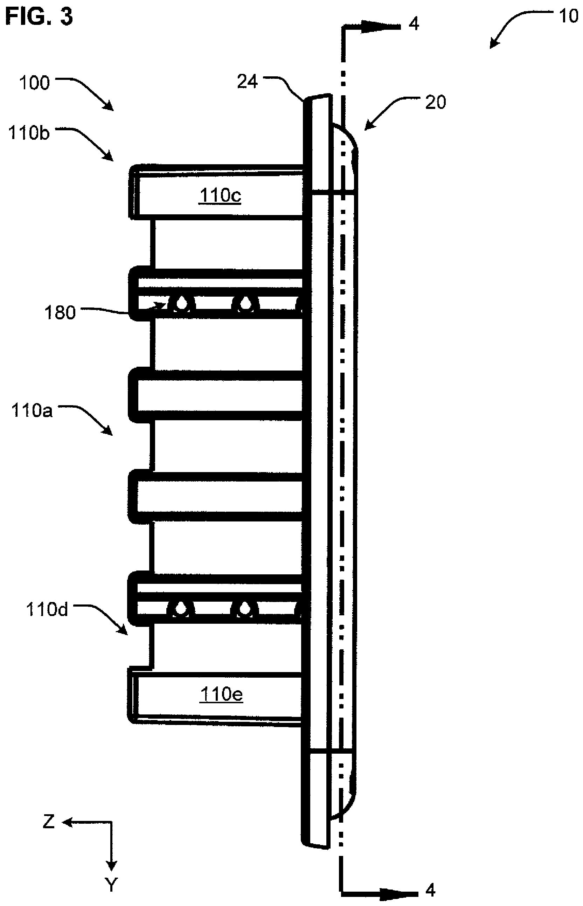

Referring now to the figures, particularly FIGS. 1-3, there is shown a storage organizing article 10 according to the present disclosure. As shown, storage organizing article 10 comprises a foundation 20, which may be in a form of a tray or shallow container, particularly for a cargo region of the motor vehicle. For a front engine motor vehicle, the cargo region may be a trunk or other storage space typically rearward of a passenger seating region. For a rear engine motor vehicle, or an electric motor vehicle, the cargo region may be a trunk (which may be referred to as a frunk) or other storage space typically forward of a passenger seating region. In either instance, the cargo region may or may not be isolated from the passenger region) of a motor vehicle.

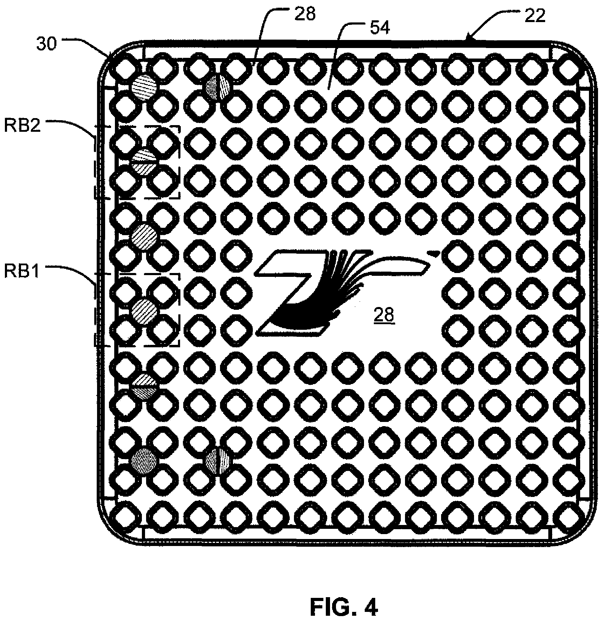

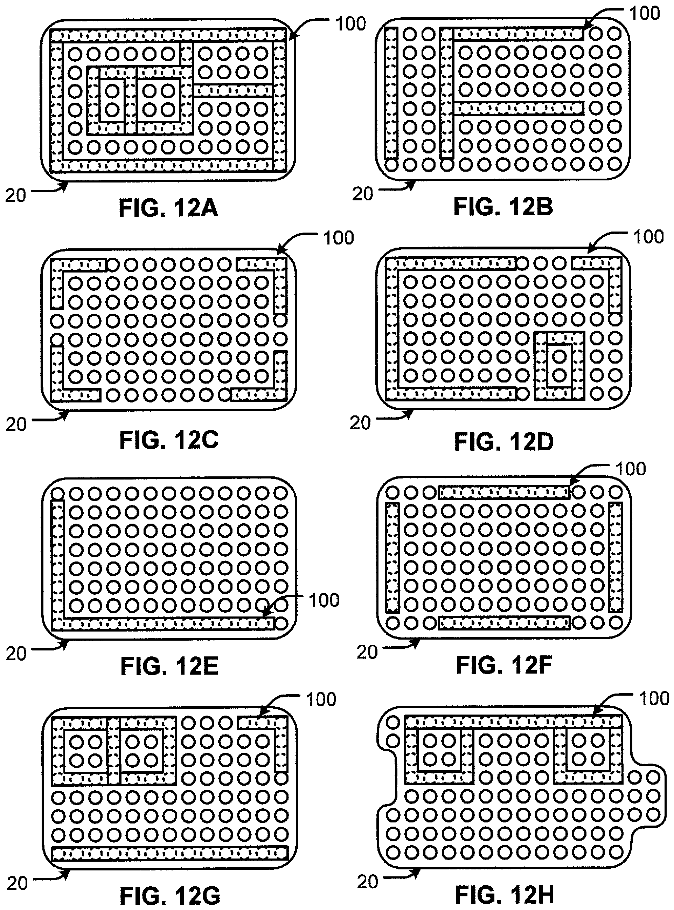

In certain embodiments, as shown by FIGS. 1-3, as well as FIGS. 4-5, foundation 20 comprises a polygonal (rectangular and more particularly square) horizontal floor 22. However, in other embodiments, the foundation 20 may have a non-polygonal shape which follows, for example, the contours of a floor pan or vertical side walls defining a perimeter of the cargo area. For example, the one of more sides of the foundation 20 may have one of more recesses and/or protrusions (e.g. see FIG. 12H) which correspond to protrusions and/or recesses in the cargo area, respectively.

As shown, horizontal floor 22 is at least partially surrounded by a vertically raised perimeter rim 24 (which may be referred to a vertically raised containment wall). As shown, the, perimeter rim 24 extends continuously around the horizontal floor 22. It should be understood that the perimeter rim 24 is preferably continuous/uninterrupted around that horizontal floor 22 in that the horizonal floor 22 is completely surrounded/enclosed by the perimeter rim 24 on all bordering sides (i.e. 360 degrees). In other embodiments, the vertically raised perimeter rim 24 may be discontinuous/intermittent around that horizontal floor 22. For example, the vertically raised perimeter rim 24 may be discontinuous/intermittent around that horizontal floor 22 at one or more sides of the foundation 20/horizontal floor 22 or may be completely eliminated at one or more sides of the foundation 20/horizontal floor 22.

Foundation 20 may be particularly configured to contain items stored in a motor vehicle (e.g. groceries, sporting equipment, clothing). In certain embodiments, foundation 20 may be vehicle specific, i.e. dimensioned or otherwise configured to fit a predetermined motor vehicle. As shown, foundation 20 is formed as a single (monolithic) component, particularly by injection molding a thermoplastic composition comprising, essentially consisting of or consisting of a polyolefin (e.g. polypropylene (PP), acrylonitrile-butadiene-styrene (ABS), polyvinyl chloride (PVC)).

As shown by FIGS. 1-5, horizontal floor 22 of foundation 20 preferably has a horizontal, planar base wall 28, with a plurality of repeating retention members 30 to retain vertical wall 100 connectable thereto as explained in greater detail below. As shown, each retention member 30 comprises a raised, spaced apart, vertically upward directed projection 32.

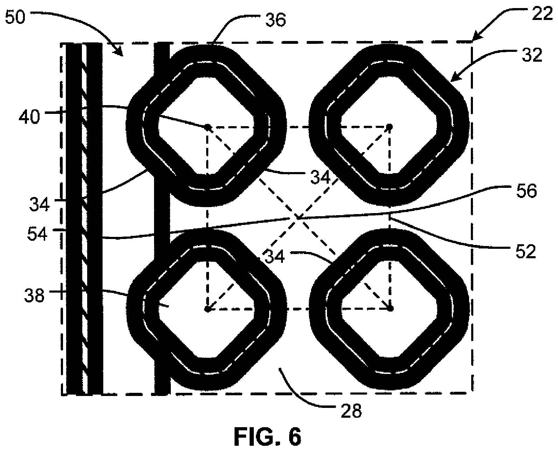

As may be best shown by FIG. 6, each projection 32 is polygonal in cross-section, and more particularly a tetragonal (four sides) in cross-section. Even more particularly, each projection 32 is a square (four sides of equal length) in cross-section. As shown, each projection 32 is square with four, vertical, planar side walls 34 of equal length joined by rounded corners 36 (e.g. a fillet). An end of the projection 32 has a horizontal, square, planar end wall 38, also with rounded corners. Each projection 32 has a center 40, which, while not shown, is a center of a square as determined by the intersection of their respective diagonals. As shown, all the projections 32 have a substantially identical geometry, i.e. having an identical geometry within manufacturing tolerances, and adjacent projections 32 are substantially equally spaced from one another, i.e. having an equal spacing within manufacturing tolerance.

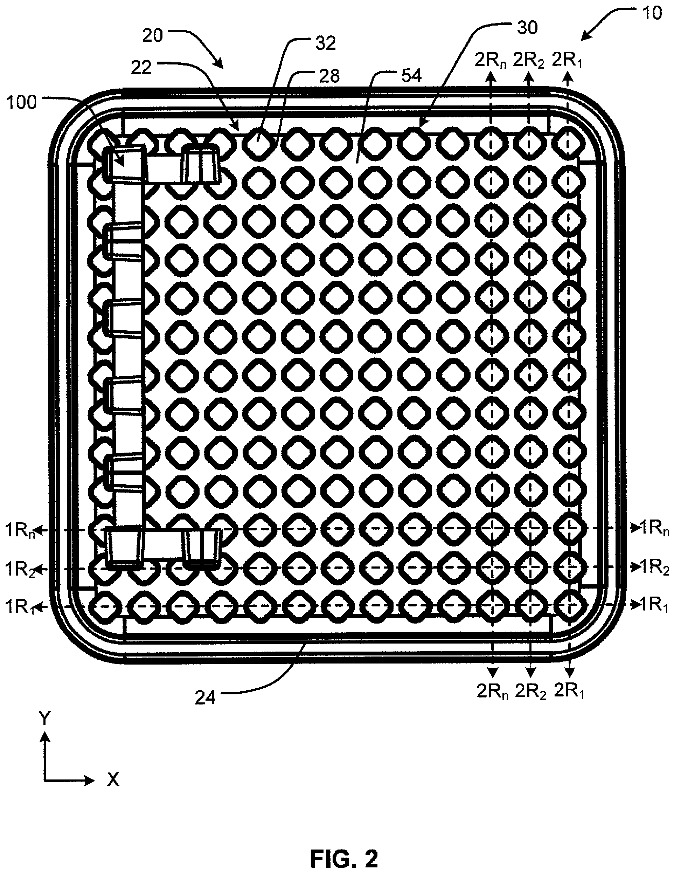

Turning to FIG. 2, the projections 32 may be arranged in a rectangular grid, which has the projections 32 arranged in a first set of linear rows 1Rn (1R₁, 1R₂, etc.) and a second set of linear rows 2Rn (2R₁, 2R₂, etc.). As shown, with the first set of rows 1Rn, the rows 1Rn of projections 32 are arranged substantially parallel to one another, i.e. being parallel to each other within manufacturing tolerances. Similarly, with the second set of rows 2Rn, the rows 2Rn of projections 32 are also arranged substantially parallel to one another, i.e. being parallel to each other within manufacturing tolerances. Moreover, as shown, the first set of rows 1Rn of projections 32 and the second set of rows 2Rn of projections 32 are arranged in two directions/along two axes X and Y substantially perpendicular to one another, i.e. being preferably perpendicular to each other within manufacturing tolerances.

As perhaps shown best by FIG. 2, the first set of the plurality of rows 1R comprises at least 2 rows, at least 3 rows, at least 4 rows, at least 5 rows, at least 6 rows, at least 7 rows, at least 8 rows, at least 9 rows, at least 10 rows, at least 11 rows, at least 12 rows or at least 13 rows. The second set of the plurality of rows 2R comprises at least 2 rows, at least 3 rows, at least 4 rows, at least 5 rows, at least 6 rows, at least 7 rows, at least 8 rows, at least 9 rows, at least 10 rows, at least 11 rows, at least 12 rows or at least 13 rows.

As also shown by FIG. 2, each row of the first set of the plurality of rows 1R comprises at least 2 retention members 30, at least 3 retention members 30, at least 4 retention members 30, at least 5 retention members 30, at least 6 retention members 30, at least 7 retention members 30, at least 8 retention members 30, at least 9 retention members 30, at least 10 retention members 30, at least 11 retention members 30, at least 12 retention members 30 or at least 13 retention members 30. Each row of the second set of the plurality of rows 2R comprises at least 2 retention members 30, at least 3 retention members 30, at least 4 retention members 30, at least 5 retention members 30, at least 6 retention members 30, at least 7 retention members 30, at least 8 retention members 30, at least 9 retention members 30, at least 10 retention members 30, at least 11 retention members 30, at least 12 retention members 30 or at least 13 retention members 30.

It should be understood from the foregoing that a row of the first set of rows 1Rn comprises at least two projections 32, and that similarly, a row of the second set of rows 2Rn comprises at least two projections 32. As such, the smallest grid according to the present disclosure is a two-by-two (i.e. 2x2) grid of projections 32, whereby the first set of rows 1Rn comprises two rows and the second set of rows 2Rn comprises two rows, each with two projections 32. It should also be understood that, given the first set of rows 1Rn and the second set of rows 2Rn are similarly composed of projections 32, the distinction between the first set of rows 2Rn and the second set of rows 2Rn delineates the directional arrangement of the sets of rows 1Rn and 2Rn with respect to one another, preferably shown being substantially perpendicular, i.e. being perpendicular to each other within manufacturing tolerances. It should also be understood that, to delineate the first set of rows 2Rn and the second set of rows 2Rn, the first set of rows 1Rn may also be referred to extending in an X-direction/axis of the foundation 20/horizontal floor 22 and the second set of rows 2Rn may be referred to as extending in a Y-direction/axis of the foundation 20/horizontal floor 22, which is substantially perpendicular to the first set of rows 1Rn, i.e. being perpendicular to each other within manufacturing tolerances.

Returning to FIG. 6, the engagement members 30/projections 32 may be arranged in a sub-grouping 50 of four engagement members 30/projections 32, which is used to engage/retain an engagement footing 140 of one or more vertical wall segments 110 as explained in greater detail below. As shown, a sub-grouping 50 of four projections 32 are preferably arranged in a two-by-two (i.e. 2x2) sub-grouping, such that the center 40 of each projection 32 of the sub-grouping 50 of four projections 32 is substantially equal distance, i.e. being equal distance to one another within manufacturing tolerance, from a center 40 of two adjacent projections 32 of the sub-grouping 50 of four projections 32. Stated another way, the center 40 of each projection 32 of the sub-grouping 50 of four projections 32 provides a corner of an imaginary square 52 linking the sub-grouping 50 of four projections 32.

As used herein, a sub-grouping may be understood as a plurality of projections 32, such as at least two projections from the total number of available projections, that engage with the engagement footings 140. As may be appreciated, two opposing projections on opposite sides of the footing 140 may sufficiently define an engagement receptacle for the footing 140. Preferably, the sub-grouping 50 may therefore comprise two or more projections 32 to define an engagement receptacle and therefore may also preferably comprise three or four projections 32.

From the figures, it should be understood that each particular projection 32 is not limited to being a member of one sub-grouping 50, but that a particular projection 32 may be a member of up to four sub-groupings 50. As such, it should be understood that a first sub-grouping 50 and a second-sub-grouping 50 are to be considered two different sub-groupings 50 if they do not share all the same projections 32 in common. Stated another way, if two sub-groupings 50 have at least one uncommon (unshared) projection 32, then the two sub-groupings 50 are different sub-groupings 50. In a case where two sub-groupings 50 do not share any projections 32 in common, the sub-groupings 50 and their respective retention members 30 may be referred to as being exclusive to one another, in addition to being considered different sub-groupings 50.

Also from the figures, it should be understood that a sub-grouping 50 of projections 32 may form two sets of two rows of projections 32, with the rows of each set preferably extending substantially parallel to each other, i.e. being parallel within manufacturing tolerance, respectively, and the sets of rows extending substantially to one another, i.e. being perpendicular within manufacturing tolerance.

As further shown by FIGS. 1-3, 5 and 7-9, storage organizing article 10 further comprises a vertical wall 100 formed of separate and distinct components from foundation 20. The vertical wall 100 includes vertical wall segments 110a, 110b, 110c, 110d and 110e.

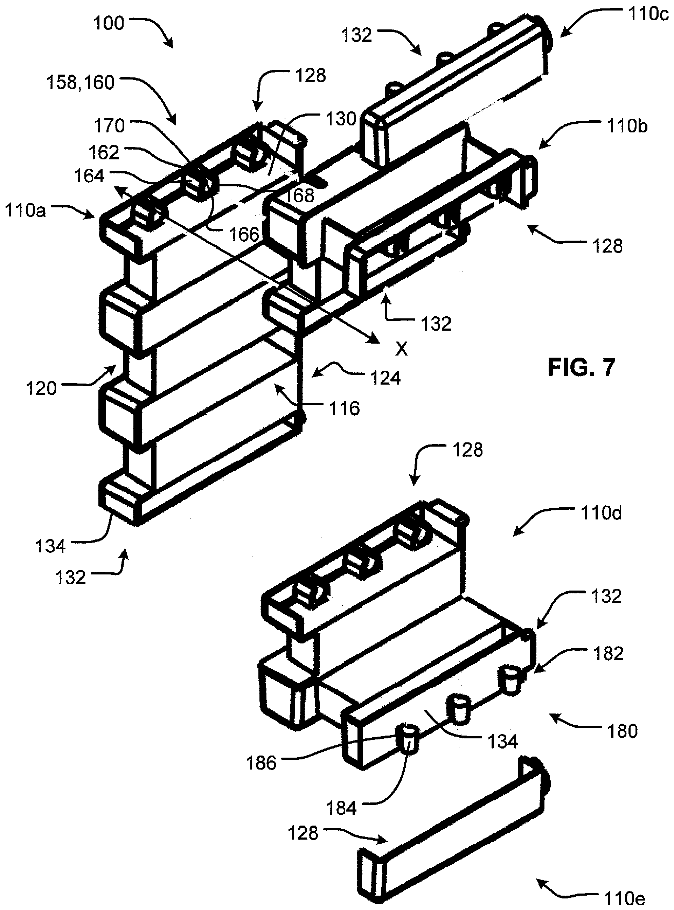

As shown by FIGS. 7-8, wall segment 110a has a front face 112, back face 116 (opposite front face 112), top face 120, bottom face 124 (opposite top face 120) and end faces 128, 132 (opposite one another). Bottom face 124 includes at least one engagement footing 140 (shown as a plurality) to engage with foundation 20 and mount wall segment 110a to foundation 20.

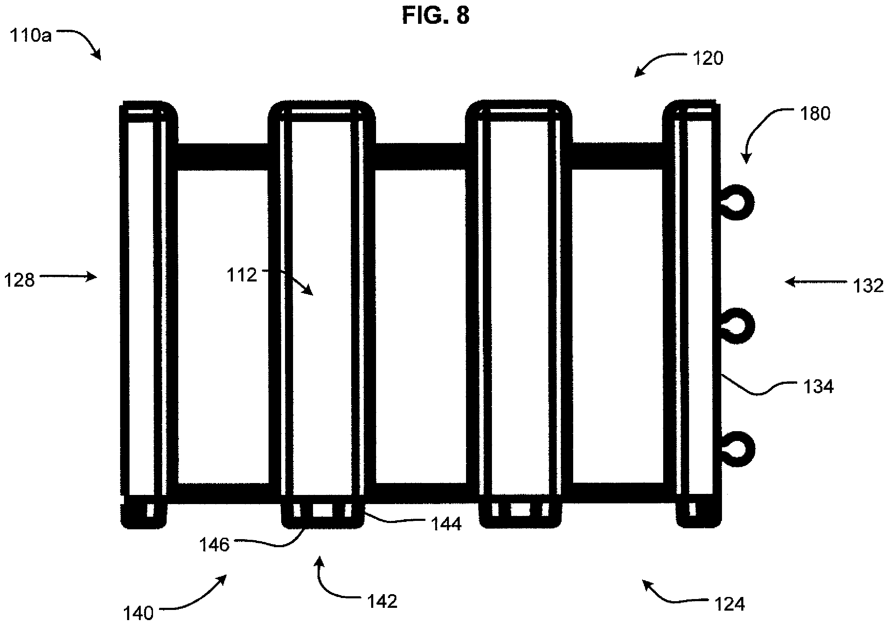

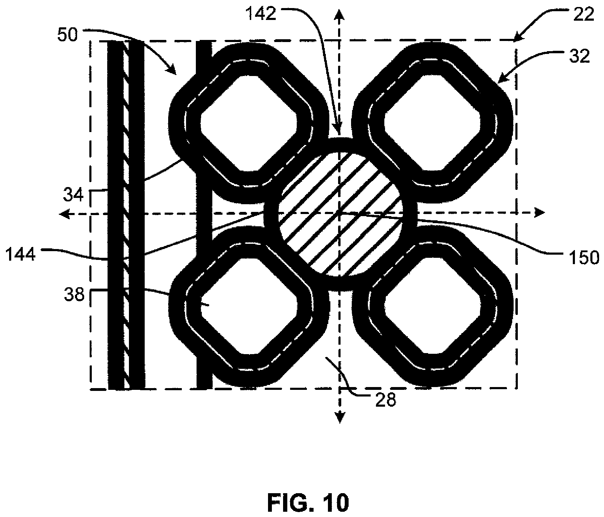

As may be best shown by FIG. 8, each engagement footing 140 comprises a vertically downward projection 142 located on the bottom face 124 of the wall segment 110a which, as explained in greater detail below, engages between and with the vertically upward directed projections 32/retention members 30 of foundation 20. As shown by FIG. 10, each projection 142 is preferably cylindrical in cross-section, with a vertical, cylindrical side wall 144. Referring back to FIG. 8, the end of the projection 142 has a horizontal, circular, planar end wall 146. Each projection 142 has a center 150 (see FIG. 10), which is the center of a constant diameter of the cylindrical side wall 144 and the circular end wall 146. As shown, all the engagement footings 1401projections 142 have a substantially identical geometry, i.e. having an identical geometry within manufacturing tolerances.

In order to assemble, and releasably mechanically connect, vertical wall segment 110a, to foundation 20 with a releasable mechanical connection, each vertically downward projection 142 is directed (pushed) into an engagement receptacle 54 (see FIG. 6) formed between a sub-grouping 50 of the vertically upward projections 32 of the foundation 20, and fits in the engagement receptacle 54 with a friction fit, which also may be known as an press (interference) fit or pressure grip fit connection. A friction fit connection may be understood herein as a connection formed between two components which solely relies upon friction to inhibit separation of the components, for example by one of the components being pressed into the other component such that at least one of the components is compressed (deformed) against one another.

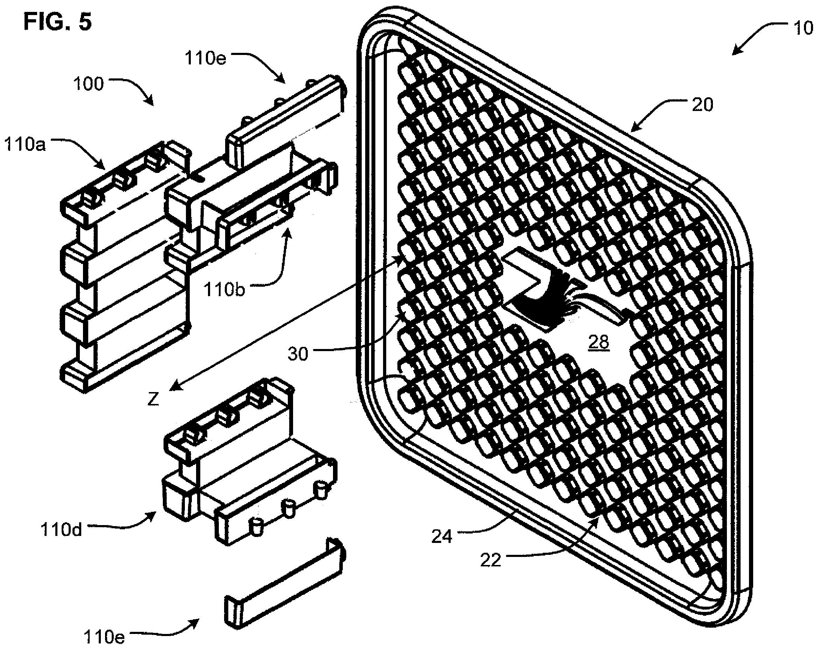

As also shown in FIG. 6, preferably, the retention members 30/projections 32 are substantially equally spaced around a center 56 of the receptacle 54, i.e. equally spaced within manufacturing tolerance. More particularly, as shown in FIG. 5, each projection 142 is pushed in an engagement receptacle 54 by moving the wall segments 110 along an assembly/disassembly (connection/disconnection) Z-direction/axis, which is transverse to the horizontal floor 22 of foundation 20, which may be understood as being vertical to the horizontal floor 22 of foundation 20, and more preferably perpendicular to the horizontal floor 22 of foundation 20.

Now referring to FIG. 10, once in each engagement receptacle 54, preferably, a portion of each of four 90 degree arcs, of the vertical cylindrical side wall 144 of the projection 142 of the wall segment 110, contacts against one of the planar side walls 34 of the adjacent surrounding projections 32 of the foundation 20 to form the releasable interference fit of the projection 142 with the projections 32 within the engagement receptacle 54. Conversely, the projections 142/engagement footings 140 of wall segments 110 may be removed from the engagement receptacles 54, respectively, by being pulled out of the engagement receptacles 54 in a direction opposite to being inserted in the engagement receptacles 54 to release the connection.

In FIG. 10, the portion of each of the four 90 degree arcs of the vertical cylindrical side wall 144 of the projection 142 of the wall segment 110, which contacts against one of the planar side walls 34 of the adjacent surrounding projections 32 of the foundation 20 to form the releasable interference fit of the projection 142 with the projections 32 may deform in forming the interference fit. More particularly, as shown, the portion of each of the four 90 degree arcs of the vertical cylindrical side wall 144 of the projection 142 of the wall segment 110, which contacts against one of the planar side walls 34 of the adjacent surrounding projections 32 may deform to form a planar surface portion which mates against the planar surface of the corresponding projection 32. Alternatively, prior to assembly, each portion of the cylindrical side wall 144 of the projection 142 of the wall segment 110, which contacts against one of the planar side walls 34 of the adjacent surrounding projections 32 may include a flat (i.e. a planar surface) to form the interference fit.

While not necessary, the vertical, cylindrical side wall 144 of each projection 142 of the wall segment 110 may be equal in vertical length to the vertical, planar side walls 34 of the projections 32 of the foundation 20 such that the planar end wall 146 of each projection 142 of the wall segment 110 may contact against the base wall 28 of the foundation 20 when fully inserted in the engagement receptacles 54. This may therefore provide additional vertical and horizontal stability of the wall segment 110 when affixed to the foundation 20.

Referring again to FIGS. 7 and 8, each end face 128, 132 of wall segment 110a preferably includes at least one (first) connector 158 to releasably mechanically connect with a (second) corresponding (mating) connector 158 of an adjacent wall segment 110b or 110d. As, shown, each end face 128, 132 of wall segment 110a preferably includes a plurality of connectors 158 to connect with corresponding (mating) connectors 158 of an adjacent wall segment 110b or 110d, respectively.

More preferably, as shown, end face 128 of wall segment 110a includes a plurality of female connectors 160 to receive a male connector 180 disposed on an end face 132 of wall segment 110b. While male connector 180 of wall segment 110b is not shown in FIG. 7, it should be understood that the male connector 180 of wall segment 110b is the same as the male connector 180 of wall segment 110d as shown, as well as all the other male connectors 180. The same may be said for female connectors 160.

As shown, female connector 160 comprises a socket 162 to receive a prong 182 of male connector 180. More particularly, the socket 162 comprises an elongated, tubular, wall 164 disposed on an end wall 130 of connecting end face 128 of wall segment 110a. Socket 162 further comprises a cylindrical cavity 166 within tubular wall 164, which an accessable via a circular opening 168 at one end of the tubular wall 164, as well as a slot 170 extending along a longitudinal length (X-direction/axis) of the tubular wall 164, resulting in the tubular wall 164 taking on a form of a C-shape.

Prong 182 of male connector 180 further comprises an elongated cylindrical post 184 disposed at a distal end of an elongated rib 186, which is disposed on the end wall 134 of end face 132 of wall segment 110b.

When assembled, post 184 of male connector 180 resides in cylindrical cavity 166 upon entering cavity 166 via circular opening 168, while rib 186 occupies slot 170.

As such, the wall segments 110, 110c are releasably mechanically connected to one another via a positive mechanical engagement, as opposed to the interference (friction/press) fit to the foundation 20.

More particularly, socket 162 and prong 182 are assembled by moving one or both of the wall segment 110a and the wall segment 110b along the X-direction/axis. Wall segment 110b and 110d are assembled in similar manner.

In contrast, wall segments 110b and 110c, as well as wall segments 110d and 110e are assembled by moving one or both wall segments along the Y-direction/axis.

After first being fully assembled, wall segments 110a-e are attached to foundation 20, with the Z-direction/axis traverse to the X-direction/axis and Y-direction/axis the one another, and more preferably perpendicular to one another. More particularly, the X-direction/axis and Y-direction/axis are horizontal, and thus parallel to the horizontal floor 22 of foundation 20, while the Z-axis is vertical, and thus perpendicular to the horizontal floor 22 of foundation 20. In such manner, the wall segments 110 are preferably inhibited from separating from one another as long as the wall segments 110 remain connected to the foundation 20. By virtue of the orientation of the assembly/disassembly axes, the wall segments 110a-e are to be disassembled (separated) from foundation 110 before being disassembled (separated) from each other. Similarly, when assembled, the wall segments 110a-e are to be assembled (connected) to each other before being assembled (connected) to the foundation 110.

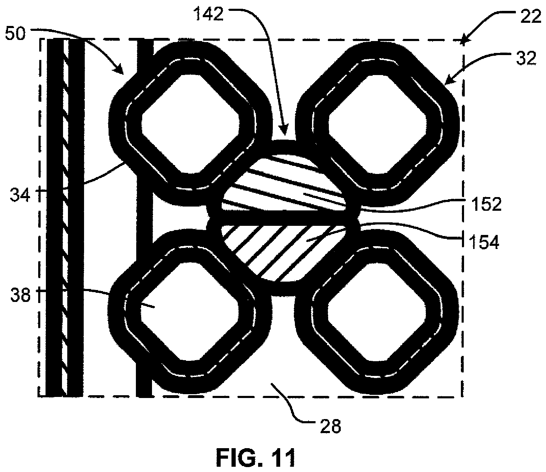

As shown in FIG. 10, the engagement footing 140, and more particularly the cylindrical projection 142, is formed solely by the straight (linear) wall segment 110a. However, as shown in FIG. 11, the engagement footing 140, and more particularly the cylindrical projection 142, is formed by two adjacent wall segments 110a and 110b. As shown, the engagement footing 140, and more particularly the cylindrical projection 142, is formed of a first (half) projection portion 152 provided by the vertical wall segment 110a, and a second (half) projection portion 152 provided by the vertical wall segment 110b.

In light of the foregoing, and as shown by the figures, it should be understood that each vertical wall segment 110a-110e of the plurality of vertical wall segments 110 comprises at least a portion of at least one engagement footing 140 of the plurality of engagement footings 140. As also shown by the figures, at least one vertical wall segment 110 of the plurality of vertical wall segments 110 comprises at least one engagement footing 140 of the plurality of engagement footings 140 (e.g. 110a, 110b, 110c). As also shown by the figures, at least one vertical wall segment 110 of the plurality of vertical wall segments 110 comprises more than one engagement footing 140 of the plurality of engagement footings 140 (e.g. 110a, 110b, 110c). As also shown by the figures, at least one vertical wall segment 110 of the plurality of vertical wall segments 110 comprises at least two engagement footings 140 of the plurality of engagement footings 140 (e.g. 110a).

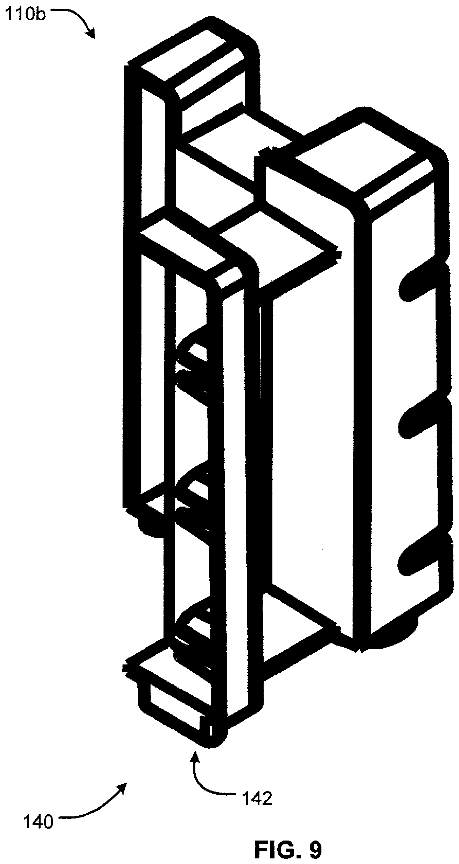

As shown by FIGS. 1-3, 5 and 7, vertical wall 100 comprises a straight (linear) wall segment 110a (e.g. see FIG. 8 individually), two corner (90 degree bend) wall segments 110b, 110d (e.g. see FIG. 9 individually), and two end caps 110c, 110e, to cover ends of linear wall segments 110a and/or corner wall segments 110b, 110d at a terminal end of the vertical wall 100. While vertical wall 100 is shown in a U-shaped configuration, it should be understood that numerous configurations are possible with the various wall segments 110a-110e, and that additional wall segments 100a-110e may be used in further repetition or wall segments 110a-110e may be eliminated. For example, a polygonal (tetragonal) shape (four sides) vertical wall 100 may be created by adding three additional straight (linear) wall segment 110a and two corner wall segments 110e, 100d, while end caps 110c, 1 10e may be eliminated. Such may be seen, for example in FIG. 12A. FIGS. 12A-12H show other exemplary configurations/layouts of the vertical wall 100 according to the present disclosure. It should be understood that the various vertical walls 100 shown in each of FIGS. 12A-12H are not exclusive to any particular configuration and can be changed or combined with any vertical wall(s) on any other illustrated configuration as feasible.

The wall segments 110a-110e may be formed by injection molding a thermoplastic composition comprising, essentially consisting of or consisting of a polyolefin (e.g. polypropylene (PP), acrylonitrile-butadiene-styrene (ABS), polyvinyl chloride (PVC)). Wall segments 1 10-1 10e may also be formed using other molding techniques such as blow molding. Also, in order to consolidate pieces, straight (linear) wall segment 110a may incorporate a living hinge which allows the linear wall segment 100a to convert to a corner wall segment when bent about the hinge. As such, the linear wall segment and corner wall segment could be consolidated into a single molded part/component.

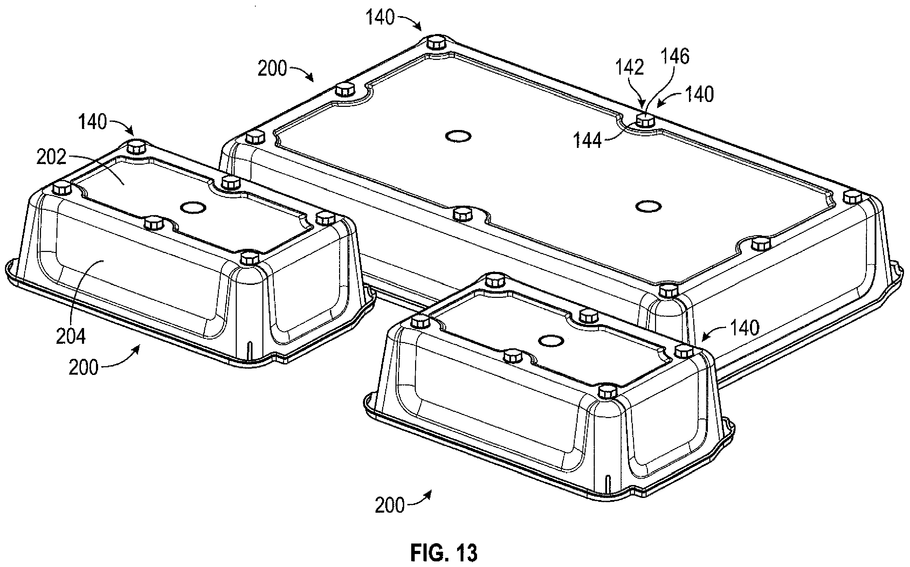

Referring now to FIG. 13, engagement footings 140 may be disposed on a bottom of a container 200, such as a storage bin, which may be used to hold, for example, durable or consumable goods such as groceries, sporting equipment and clothing. As shown, the engagement footings 140 may be disposed about a periphery of the bottom of the container 200. More particularly, engagement footings 140 may be disposed on a horizontal bottom wall 202 of the container 200, which is disposed adjacent a surrounding vertical side wall 204.

Container 200 may have a storage volume of at least 1 liter, such as at least 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99 or 100 liters. Container 200 may have a volume range, for example, of 1-100 liters, 4-100 liters, 4-50 liters, 4-25 liters, 10-50 liters, 15-50 liters, 20-50 liters, 25-50 liters, 51-100 liters, 51-90 liters, 51-80 liters, 51-70 liters, 51-60 liters, 55-100 liters, 60-100 liters, 70-100 liters, 80-100 liters and 90-100 liters. As shown, container 200 is a one-piece, injection molded, polygonal, plastic container, which may be formed of a thermoplastic polyolefin, such as polypropylene or polyethylene. Container 200 may be capable of storing flowable or flowing compositions, including bulk material in solid form (e.g. soil, mulch, stone), and liquid form (e.g. water).

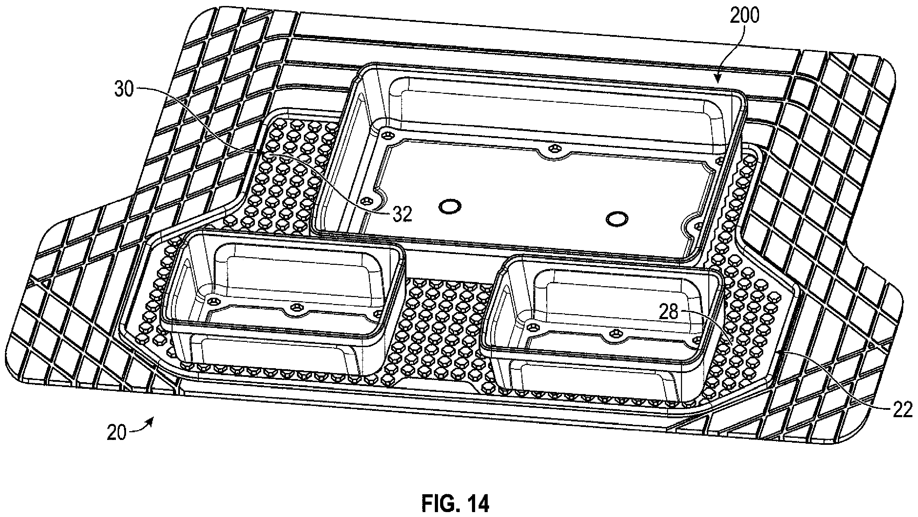

Referring now to FIG. 14, the engagement footings 140 of one or more same size or different size containers 200 may be releasably connected with foundation 20. As shown, foundation 20 may be in the form of a floor mat, particularly for a cargo region of the motor vehicle. As with previous figures, foundation 20 comprises a horizontal floor 22 having a planar base wall 28, as well as a plurality of repeating retention members 30, which each comprise a raised, spaced apart, vertically upward directed projection 32.

As shown, as with earlier description, the projections 32 may be arranged in a rectangular grid, which has the projections 32 arranged in a first set of linear rows 1Rn and a second set of linear rows 2Rn, particularly arranged in two directions/along two axes X and Y substantially perpendicular to one another, i.e. being preferably perpendicular to each other within manufacturing tolerances.

As shown, as with earlier description, the engagement members 30/projections 32 may be arranged in a sub-grouping 50 of four engagement members 30/projections 32, which is used to releasably connect with an engagement footing 140 of the container 200. As such, it should be understood that the description regarding such accompanying the earlier figures applies equally to FIGS. 13 and 14.

While a preferred embodiment of the present invention(s) has been described, it should be understood that various changes, adaptations and modifications can be made therein without departing from the spirit of the invention(s) and the scope of the appended claims. The scope of the invention(s) should, therefore, be determined not with reference to the above description, but instead should be determined with reference to the appended claims along with their full scope of equivalents. Furthermore, it should be understood that the appended claims do not necessarily comprise the broadest scope of the invention(s) which the applicant is entitled to claim, or the only manner(s) in which the invention(s) may be claimed, or that all recited features are necessary.

### Listing of reference characters:

- 10: storage organizing article
- 20: foundation
- 22: horizontal floor
- 24: perimeter rim
- 28: base wall
- 30: retention member
- 32: projection
- 34: planar side wall
- 36: rounded corner
- 38: end wall
- 40: center
- 50: sub-grouping of retention members/projections
- 52: imaginary square
- 54: engagement receptacle
- 56: center of engagement receptacle
- 100: vertical wall
- 110: vertical wall segments (110a-110e)
- 112: front face
- 116: back face
- 120: top face
- 124: base face
- 128: connecting end face
- 130: end wall
- 132: connecting end face
- 134: end wall
- 140: engagement footing
- 142: projection
- 144: cylindrical side wall
- 146: end wall
- 150: center
- 152: first portion of footing/projection
- 154: second portion of footing/projection
- 158: connector
- 160: female connector
- 162: socket
- 164: tubular wall
- 166: cylindrical cavity
- 168: circular opening
- 170: slot
- 180: male connector
- 182: prong
- 184: cylindrical post
- 186: rib
- 200: container
- 202: bottom wall
- 204: side wall
- X: direction/axis
- Y: direction/axis
- Z: direction/axis
- RB1: rectangular box
- RB2: rectangular box

## Claims

1. A storage organizing article, comprising:
a foundation comprising a horizontal floor;
at least one container having a plurality of engagement footings;
wherein the container is releasably connectable to the foundation via the plurality of engagement footings of the container;
wherein the horizontal floor has a base wall, a plurality of retention members and a plurality of engagement receptacles;
wherein each engagement receptacle of the plurality of engagement receptacles is formed by a sub-grouping of the plurality of retention members, respectively; and
wherein, when the foundation and the container are connected, each of the engagement footings of the plurality of engagement footings is respectively disposed in one of the engagement receptacles of the plurality of engagement receptacles and forms a releasable interference fit with the sub-grouping of the plurality of retention members forming the engagement receptacle.

2. The storage organizing article of claim 1, wherein each of the engagement footings of the plurality of engagement footings comprises a projection;
wherein each retention member of each sub-grouping of the plurality of retention members comprises a projection which projects vertically upward relative to the base wall; and
wherein, when the foundation and the container are connected, each projection of each of the engagement footings is disposed in one of the engagement receptacles and forms a releasable interference fit with each of the projections of each sub-grouping forming the engagement receptacle.

3. The storage organizing article of claim 2, wherein the projection of each of the engagement footings is substantially identical.
and wherein preferably the projection of each of the engagement footings is cylindrical in cross-section.

4. The storage organizing article of claim 2, wherein the projection of each retention member of each sub-grouping is substantially identical and
wherein preferably the projection of each retention member of each sub-grouping is polygonal, most preferably square in cross-section.

5. The storage organizing article of claim 1, wherein each engagement receptacle of the plurality of engagement receptacles formed by a sub-grouping of the plurality of retention members is formed by at least two retention members.

6. The storage organizing article of claim 1, wherein each sub-grouping of the plurality of retention members is formed by four retention members.

7. The storage organizing article of claim 6, wherein the four retention members of each sub-grouping are substantially equally spaced around a center of each engagement receptacle of the plurality of engagement receptacles, respectively.

8. The storage organizing article of claim 1, wherein the plurality of retention members are arranged in a plurality of rows;
wherein a first set of the plurality of rows are substantially parallel to one another;
wherein a second set of the plurality of rows are substantially parallel to one another; and
wherein the first set of the plurality of rows and the second set of the plurality of rows are substantially perpendicular to one another.

9. The storage organizing article of claim 8, wherein the first set of the plurality of rows comprises at least 2 rows, at least 3 rows, at least 4 rows, at least 5 rows, at least 6 rows, at least 7 rows, at least 8 rows, at least 9 rows, at least 10 rows, at least 11 rows, at least 12 rows or at least 13 rows; and
the second set of the plurality of rows comprises at least 2 rows, at least 3 rows, at least 4 rows, at least 5 rows, at least 6 rows, at least 7 rows, at least 8 rows, at least 9 rows, at least 10 rows, at least 11 rows, at least 12 rows or at least 13 rows.

10. The storage organizing article of claim 8, wherein each row of the first set of the plurality of rows comprises at least 2 retention members, at least 3 retention members, at least 4 retention members, at least 5 retention members, at least 6 retention members, at least 7 retention members, at least 8 retention members, at least 9 retention members, at least 10 retention members, at least 11 retention members, at least 12 retention members or at least 13 retention members; and
wherein each row of the second set of the plurality of rows comprises at least 2 retention members, at least 3 retention members, at least 4 retention members, at least 5 retention members, at least 6 retention members, at least 7 retention members, at least 8 retention members, at least 9 retention members, at least 10 retention members, at least 11 retention members, at least 12 retention members or at least 13 retention members.

11. The storage organizing article of claim 1, wherein the base wall is planar.

12. The storage organizing article of claim 1, wherein the foundation further comprises a perimeter rim which at least partially, preferably completely surrounds the horizontal floor.

13. The storage organizing article of claim 1, wherein the foundation is in a form of a floor mat.

14. The storage organizing article of claim 1, wherein the foundation and/or the container is formed of an injection molded thermoplastic composition.

15. The storage organizing article of claim 1, wherein the container has a storage volume in a range of 1liter to 100 liters.
